# EUROPEAN PATENT APPLICATION

(11) **EP 1 986 142 A1**
(43) Date of publication of application: **29.10.2008**
(21) Application number: 07106919.9
(22) Date of filing: 25.04.2007
(51) Int. Cl.: G06Q 10/00

(54) **Method and system for modifying a meeting attendee list of an email calendar application**

(71) Applicant: Research In Motion Limited, Waterloo, Ontario N2L 3W8 (CA)
(72) Inventor: Vander Veen, Raymond, Waterloo Ontario N2V 2M6 (CA); Adams, Neil, Waterloo Ontario N2K 4E4 (CA); Michael, Mark, Kitchener Ontario N2H 5M9 (CA)
(74) Representative: Rickard, David John

(57) **Abstract**

A method for updating a list of attendees for a meeting scheduled by a meeting organizer through a user interface of an electronic calendar presented on a display of a system, the system being coupled to respective attendee systems of attendees of the meeting over a network, the method comprising: distributing the list of attendees to the attendee systems; receiving a signal indicating whether a request message from an attendee system is required to request permission for the attendee system to at least one of add and remove one or more selected attendees from the list of attendees; if the request message is required: receiving the request message from the attendee system; presenting the request message to the meeting organizer on the display with a choice of responses for responding to the request message; and, receiving a signal selecting a response from the choice of responses; wherein the choice of responses has an accept response which, when selected, causes the list of attendees to be updated in accordance with the request message to produce an updated list of attendees.

## Description

This application relates generally to the field of electronic calendars and meeting scheduling, and more specifically, to a method and system for modifying a meeting attendee list for an electronic calendar of an electronic mail application.

Current wireless mobile communication devices include microprocessors, memory, soundcards, and run one or more software applications. Examples of software applications used in these wireless devices include micro-browsers, address books, electronic mail ("email") clients, instant messaging ("IM") clients, and wavetable instruments. Additionally, wireless devices have access to a plurality of services via the Internet. A wireless device may, for example, be used to browse Web sites on the Internet, to transmit and receive graphics, and to execute streaming audio and/or video applications. The transfer of Internet content to and from wireless device is typically facilitated by the Wireless Application Protocol ("WAP"), which integrates the Internet and other networks with wireless network platforms.

Email applications typically include a calendar function which allows a user to schedule meetings, appointments, and other tasks. For example, Outlook™ from Microsoft Corp. includes a calendar function that allows a user to organize meetings using email. Meetings are organized in Outlook™ based on a model that has three basic components: an organizer, participants, and a location. In addition, in an Outlook™ meeting there are distinct roles that dictate what a person does and the amount of control he or she has. In Outlook™, a meeting is an activity that the user schedules in his or her calendar that involves inviting other people or reserving resources. The people involved have the following distinct titles and roles: meeting organizer and attendee. The meeting organizer is the user who sets up a meeting. The organizer is the only person who can change the meeting details once it has been set up. Also, in Outlook™, a new organizer cannot be assigned to an existing meeting. Once a user is the organizer, that user is always the organizer. Any user who is invited to the meeting is considered an attendee. There are two categories of attendee: required and optional. Once an attendee is added to the attendee list, that person will always be considered an attendee for the meeting. Even if an attendee declines a meeting, he or she is still considered an attendee. In Outlook™, the location/resource is the place where the meeting will occur. It is sometimes referred to as the resource.

When meetings are scheduled and maintained in Outlook™, a user can improve the efficiency of the process because Outlook™ keeps track of the details using its email inbox and calendar functions. When these details change, they can be updated for everyone, all at once, with the click of a button. The process of setting up a meeting in Outlook™ is as follows. First, the meeting organizer schedules the meeting and sends all of the participants a special type of message called a "meeting request". The details of the meeting request may be viewed via the "appointment" tab or window of the meeting request. This request is delivered to the email inboxes of all of the meeting participants. Once the request is in the attendee's inbox, Outlook™ recognizes it as something that belongs in the calendar and puts it there as a "tentative" entry until the attendee has a chance to respond. Attendees read the request and respond. A "meeting response", which is similar to a meeting request, is sent back to the inbox of the meeting organizer - and just as it did with the requests, Outlook™ recognizes each response as something special. The meeting entry is updated in the organizer's calendar with information about who is coming.

The comings and goings of meeting requests and their related calendar entries are tracked in Outlook™ by an application nick-named the "sniffer." The meeting requests that a meeting organizer sends to attendees, as well as their responses, are detected by the sniffer as they sit in the organizer's inbox. The sniffer then updates the calendar and the requests themselves with the relevant information. When an attendee receives a meeting request, the sniffer automatically enters that request as a tentative item in the attendee's calendar to help reduce their chances of getting double-booked.

In Outlook™, the meeting organizer can change any aspect of the meeting, at any time, after the meeting request has been sent. To do this, first the meeting organizer would make his or her changes in the meeting request in his or her calendar, and then the meeting organizer would send an update to the people who need to know about the change by clicking on a "send update" button.

In Outlook™, when a meeting request lands in an attendee's inbox, it is automatically added to the attendee's calendar. This reduces the potential for double-bookings and helps the attendee to avoid missing meetings. The attendee still needs to reply to the meeting organizer, confirming his or her attendance. To respond to a meeting request, the attendee has to click one of the buttons in the request. When this is done, a meeting response is created and sent to the meeting organizer. In general, once an attendee responds, the request is removed from his or her inbox. The response buttons in the request are as follows. The "Accept" button is selected when the attendee knows that he or she will be able to attend the meeting. When the attendee accepts a meeting, the meeting is scheduled in his or her calendar and he or she receives updates if the meeting organizer changes the details of the meeting. The "Decline" button is selected when the attendee knows that he or she will not be able to attend the meeting. Declining a meeting deletes the item from the attendee's calendar (freeing that block of time), but it does not sever the attendees ties with the meeting: The attendee will still get updates if the meeting organizer makes them and the attendee will have the opportunity to respond to the update. If the attendee truly wants to opt out of a meeting, the attendee will have to ask the organizer to remove his or her name from the attendee list. The "Tentative" button is selected when the attendee is interested in the meeting, but is not sure whether he or she will be able to attend.

The "Scheduling" tab or window in the meeting request allows an attendee or organizer to view a list of all the people who were invited to the meeting. Note, however, that only the meeting organizer knows who is coming for sure because only the meeting organizer receives the responses to the meeting request, and it's the responses that report back to the meeting organizer about who is coming.

In Outlook™, it is possible for an attendee to forward a meeting request to someone else. When an attendee forwards a meeting request, the person that it is forwarded to will respond directly to the meeting organizer. That is, when that attendee responds to the meeting request, the meeting organizer will receive a message directly from that person - the attendee originally forwarding the meeting request will be out of the loop. However, such a forwarded request may be an unpleasant surprise to the organizer as there may be space limitations for the meeting location, there may be costs associated with the meeting (e.g., lunch, etc.), or the subject matter of the meeting may be controversial or confidential. In these situations, it is often best for the attendee to ask the meeting organizer to add a new attendee rather than taking matters into his or her own hands.

Now, users of wireless and other devices may typically use a calendar application on their devices, and the calendar may be linked wirelessly with a desktop version of the calendar (e.g., Outlook™). When a wireless device user organizes a meeting for one or more other users of the same calendar application, a list of attendees is created through the device's calendar application user interface ("UI") or graphical user interface ("GUI").

Consider the following scenario. User "A" creates a meeting request through the appointment tab of an application such as Outlook™ and invites users "B", "C", and "D". Thus, user A is the meeting organizer and users B, C, and D are the attendees. One problem faced by users of such a calendar application is that, as the meeting organizer, only user A can change the list of attendees (or invitees). For example, user B may want to add a user E to the list of attendees. However, the only way to accomplish this effectively is for user B to ask user A to add user E to the attendee list. This causes extra email and/or telephone use, and generally a waste of resources.

A need therefore exists for an improved method and system for allowing attendees of a meeting scheduled through an electronic calendar application to modify a list of attendees for the meeting. Accordingly, a solution that addresses, at least in part, the above and other shortcomings is desired.

### BRIEF DESCRIPTION OF THE DRAWINGS

Further features and advantages of the embodiments of the present application will become apparent from the following detailed description, taken in combination with the appended drawings, in which:

FIG. 1 is a block diagram illustrating a data processing system adapted for implementing an embodiment of the application;

FIG. 2 is a block diagram illustrating a wireless device and a wireless communications system adapted for implementing an embodiment of the application;

FIG. 3 is a block diagram illustrating a memory of the wireless device of FIG. 2;

FIG. 4 is a screen capture illustrating an appointment window of an exemplary graphical user interface ("GUI") for composing a meeting request;

FIG. 5 is a screen capture illustrating a scheduling window of the exemplary graphical user interface ("GUI")of FIG. 4;

FIG. 6 is a screen capture illustrating an address book pop-up window for selecting attendees for the meeting request of FIGS. 4 and 5;

FIG. 7 is a screen capture illustrating a response window for composing a meeting response to the meeting request of FIGS. 4 and 5;

FIG. 8 is a screen capture illustrating an appointment window of a graphical user interface ("GUI") for composing a meeting request in accordance with an embodiment of the application;

FIG. 9 is a screen capture illustrating a response window for composing a meeting response to the meeting request of FIG. 8 in accordance with an embodiment of the application;

FIG. 10 is a screen capture illustrating an add attendee prompt dialog box in accordance with an embodiment of the application; and,

FIG. 11 is a flowchart illustrating operations of modules within the memory of a data processing system for updating a list of attendees for a meeting scheduled by a meeting organizer through a user interface of an electronic calendar presented on a display of the system, the system being coupled to respective attendee systems of attendees of the meeting over a network, in accordance with an embodiment of the application.

It will be noted that throughout the appended drawings, like features are identified by like reference numerals.

### GENERAL

Embodiments of the present application may be implemented in any computer programming language provided that the operating system of the data processing system provides the facilities that may support the requirements of the application. Any limitations presented would be a result of a particular type of operating system or computer programming language and would not be a limitation of the present application.

According to one aspect of the application, there may be provided a method for updating a list of attendees for a meeting scheduled by a meeting organizer through a user interface of an electronic calendar presented on a display of a system, the system being coupled to respective attendee systems of attendees of the meeting over a network, the method comprising: distributing the list of attendees to the attendee systems; receiving a signal indicating whether a request message from an attendee system is required to request permission for the attendee system to at least one of add and remove one or more selected attendees from the list of attendees; if the request message is required: receiving the request message from the attendee system; presenting the request message to the meeting organizer on the display with a choice of responses for responding to the request message; and, receiving a signal selecting a response from the choice of responses; wherein the choice of responses has an accept response which, when selected, causes the list of attendees to be updated in accordance with the request message to produce an updated list of attendees.

In accordance with further aspects of the present application there may be provided apparatus such as a data processing system and a wireless device, methods for adapting these, as well as articles of manufacture such as a computer readable medium having program instructions recorded therein for practising the method of the application.

### DESCRIPTION OF PREFERRED EMBODIMENTS

In the following description, details are set forth to provide an understanding of the application. In some instances, certain software, circuits, structures and techniques have not been described or shown in detail in order not to obscure the application.

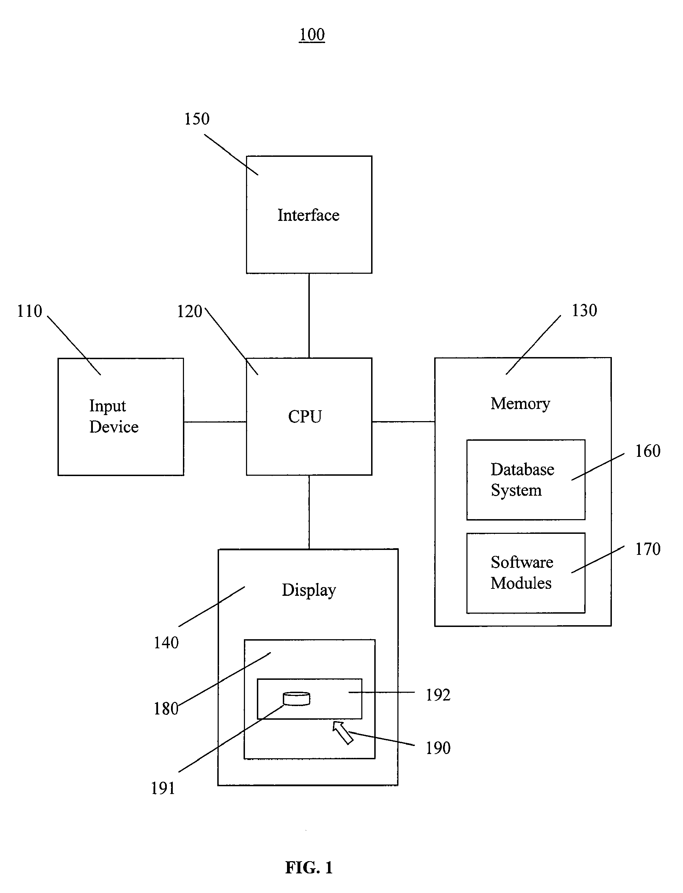

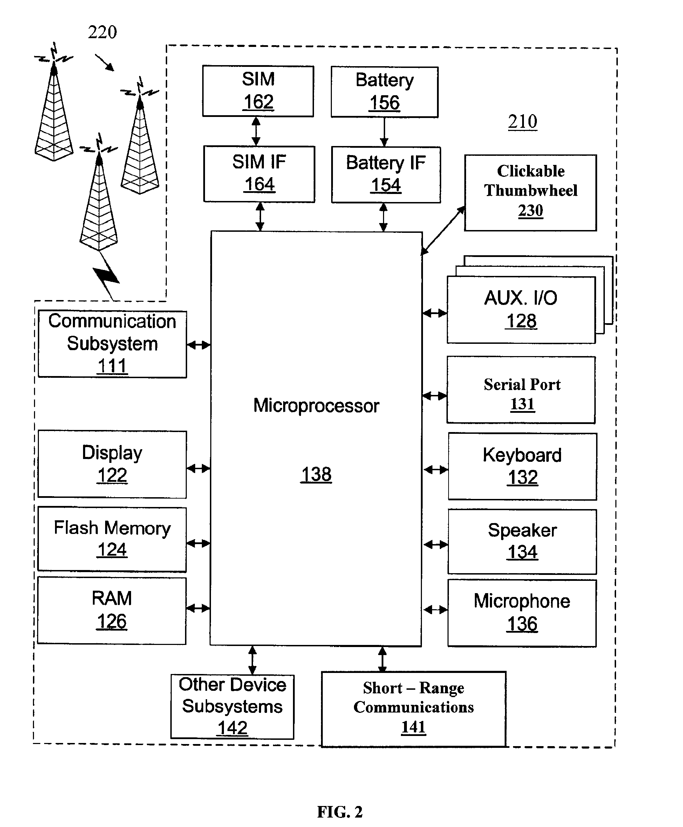

FIG. 1 is a block diagram illustrating a data processing system **100** adapted for implementing an embodiment of the application. The data processing system **100** includes an input device **110**, a central processing unit or CPU **120**, memory **130**, a display **140**, and an interface **150**. The input device **110** may include a keyboard, mouse, trackball, remote control, or similar device. The CPU **120** may include dedicated coprocessors and memory devices. The memory **130** may include RAM, ROM, or disk devices. The display **140** may include a computer screen, terminal device, or a hardcopy producing output device such as a printer or plotter. And, the interface **150** may include a network connection including an Internet connection and a wireless network **220** connection (see FIG. 2). The data processing system **100** is adapted for communicating with wireless devices **210** over a wireless network **220.**

The data processing system **100** may be a server system or a personal computer ("PC") system. The CPU **120** of the system **100** is operatively coupled to memory **130** which stores an operating system (not shown) for general management of the system **100**. The interface **150** may be used for communicating to external data processing systems (e.g., **210** in FIG. 2) through a network (such as the Internet) or wireless network **220** (see FIG. 2).

The data processing system **100** may include a database system **160** for storing and accessing programming information. The database system **160** may include a database management system ("DBMS") and a database and is stored in the memory **130** of the data processing system **100**.

The CPU **120** of the system **100** is typically coupled to one or more devices **110** for receiving user commands or queries and for displaying the results of these commands or queries to the user on a display **140**. As mentioned, the memory **130** may include a variety of storage devices including internal memory and external mass storage typically arranged in a hierarchy of storage as understood to those skilled in the art.

A user may interact with the data processing system **100** and its software modules **170** using a graphical user interface ("GUI") **180**. The GUI **180** may be Web-based and may be used for monitoring, managing, and accessing the data processing system **100**. GUIs are supported by common operating systems and provide a display format which enables a user to choose commands, execute application programs, manage computer files, and perform other functions by selecting pictorial representations known as icons, or items from a menu through use of an input or pointing device such as a mouse **110**. In general, a GUI is used to convey information to and receive commands from users and generally includes a variety of GUI objects or controls, including icons, toolbars, drop-down menus, text, dialog boxes, buttons, and the like. A user typically interacts with a GUI **180** presented on a display **140** by using an input or pointing device (e.g., a mouse) **110** to position a pointer or cursor **190** over an object **191** and by "clicking" on the object **191**.

Typically, a GUI based system presents application, system status, and other information to the user in "windows" appearing on the display **140**. A window **192** is a more or less rectangular area within the display **140** in which a user may view an application or a document. Such a window **192** may be open, closed, displayed full screen, reduced to an icon, increased or reduced in size, or moved to different areas of the display **140**. Multiple windows may be displayed simultaneously, such as: windows included within other windows, windows overlapping other windows, or windows tiled within the display area.

Thus, the data processing system **100** includes computer executable programmed instructions for directing the system **100** to implement the embodiments of the present application. The programmed instructions may be embodied in one or more hardware or software modules **170** resident in the memory **130** of the data processing system **100**. Alternatively, the programmed instructions may be embodied on a computer readable medium (such as a CD disk or floppy disk) which may be used for transporting the programmed instructions to the memory **130** of the data processing system **100**. Alternatively, the programmed instructions may be embedded in a computer-readable signal or signal-bearing medium that is uploaded to a network by a vendor or supplier of the programmed instructions, and this signal or signal-bearing medium may be downloaded through the interface **150** to the data processing system **100** from the network by end users or potential buyers.

FIG. 2 is a block diagram illustrating a wireless device **210** and a wireless network **220** adapted for implementing an embodiment of the invention. Typically, the wireless device **210** is a handheld device **210**. The wireless network **220** includes antenna, base stations, and supporting radio equipment, known to those of ordinary skill in the art, for supporting wireless communications between the wireless device **210**, other wireless devices (not shown), and other systems such as the data processing system **100**. The wireless network **220** may be coupled to a wireless network gateway (not shown) and to a wide area network (not shown) to which the data processing system **100** may be coupled through its interface **150**.

The wireless device **210** is a two-way communication device having at least voice and advanced data communication capabilities, including the capability to communicate with other computer systems **100**. Depending on the functionality provided by the device **210**, it may be referred to as a data messaging device, a two-way pager, a cellular telephone with data messaging capabilities, a wireless Internet appliance, a data communication device (with or without telephony capabilities), a Wi-Fi device, a WLAN device, or a dual-mode (i.e., Wi-Fi and cellular) device. The device **210** may communicate with any one of a plurality of fixed transceiver stations within its geographic coverage area.

The wireless device **210** will normally incorporate a communication subsystem **111**, which includes a RF receiver, a RF transmitter, and associated components, such as one or more (preferably embedded or internal) antenna elements, local oscillators ("LOs"), and a processing module such as a digital signal processor ("DSP") (all not shown). As will be apparent to those skilled in the field of communications, the particular design of the communication subsystem **111** depends on the communication network **220** in which the device **210** is intended to operate.

Cellular network access is associated with a subscriber or user of the device **210** and therefore the device **210** may require a Subscriber Identity Module (or "SIM" card) **162** to be inserted in a SIM interface ("IF") **164** in order to operate in the network (e.g., a GSM network).

The device **210** is a battery-powered device so it also includes a battery IF **154** for receiving one or more rechargeable batteries **156**. Such a battery **156** provides electrical power to most if not all electrical circuitry in the device **210**, and the battery IF **154** provides for a mechanical and electrical connection for it. The battery IF **154** is coupled to a regulator (not shown) which provides power to the circuitry of the device **210**.

The wireless device **210** includes a microprocessor **138** which controls overall operation of the device **210**. Communication functions, including at least data and voice communications, are performed through the communication subsystem **111.** The microprocessor **138** also interacts with additional device subsystems such as a display **122,** a flash memory **124** or other persistent store, a random access memory ("RAM") **126,** auxiliary input/output ("I/O") subsystems **128,** a serial port (e.g., a universal serial bus ("USB") port) **131**, a keyboard **132**, a clickable thumbwheel **230**, a speaker **134**, a microphone **136**, a short-range communications subsystem **141**, and any other device subsystems generally designated at **142**. Some of the subsystems shown in FIG. 2 perform communication-related functions, whereas other subsystems may provide "resident" or on-device functions. Notably, some subsystems, such as the keyboard **132** and display **122**, and clickable thumbwheel **230**, for example, may be used for both communication-related functions, such as entering a text message for transmission over a communication network **220**, and device-resident functions such as a calculator or task list. Operating system software used by the microprocessor **138** is preferably stored in a persistent store such as the flash memory **124**, which may alternatively be a read-only memory ("ROM") or similar storage element (not shown). Those skilled in the art will appreciate that the operating system, specific device applications, or parts thereof, may be temporarily loaded into a volatile store such as RAM **126**.

The microprocessor **138**, in addition to its operating system functions, preferably enables execution of software applications on the device **210**. A predetermined set of applications which control basic device operations, including at least data and voice communication applications, will normally be installed on the device **210** during its manufacture. A preferred application that may be loaded onto the device **210** may be a personal information manager ("PIM") application having the ability to organize and manage data items relating to the user such as, but not limited to, instant messaging ("IM"), email, calendar events, voice mails, appointments, and task items. Naturally, one or more memory stores are available on the device **210** and SIM **162** to facilitate storage of PIM data items and other information.

The PIM application preferably has the ability to send and receive data items via the wireless network **220**. In a preferred embodiment, PIM data items are seamlessly integrated, synchronized, and updated via the wireless network **220**, with the wireless device user's corresponding data items stored and/or associated with a host computer system such as the data processing system **100** thereby creating a mirrored host computer on the device **210** with respect to such items. This is especially advantageous where the host computer system is the wireless device user's office computer system. Additional applications may also be loaded onto the device **210** through the network **220**, the auxiliary I/O subsystem **128**, the serial port **131**, the short-range communications subsystem **141**, or any other suitable subsystem **142**, and installed by a user in RAM **126** or preferably in a non-volatile store (not shown) for execution by the microprocessor **138**. Such flexibility in application installation increases the functionality of the device **210** and may provide enhanced on-device functions, communication-related functions, or both. For example, secure communication applications may enable electronic commerce functions and other such financial transactions to be performed using the wireless device **210**.

In a data communication mode, a received signal such as a text message, an email message, an instant messaging ("IM") message, or Web page download will be processed by the communication subsystem **111** and input to the microprocessor **138**. The microprocessor **138** will preferably further process the signal for output to the display **122** and/or to the auxiliary I/O device **128**. A user of the wireless device **210** may also compose data items, such as email and IM messages, for example, using the keyboard **132** in conjunction with the display **122**, the clickable thumbwheel **230**, and possibly the auxiliary I/O device **128**. The keyboard **132** is preferably a complete alphanumeric keyboard and/or a telephone-type keypad. These composed items may be transmitted over a communication network **220** through the communication subsystem **111** or the short range communication subsystem **141**.

For voice communications, the overall operation of the wireless device **210** is substantially similar, except that the received signals would be output to the speaker **134** and signals for transmission would be generated by the microphone **136**. Alternative voice or audio I/O subsystems, such as a voice message recording subsystem, may also be implemented on the device **210.** Although voice or audio signal output is preferably accomplished primarily through the speaker **134**, the display **122** may also be used to provide, for example, an indication of the identity of a calling party, duration of a voice call, or other voice call related information.

The serial port **131** shown in FIG. 2 is normally implemented in a personal digital assistant ("PDA")-type communication device for which synchronization with a user's desktop computer is a desirable, albeit optional, component. The serial port **131** enables a user to set preferences through an external device or software application and extends the capabilities of the device **210** by providing for information or software downloads to the device **210** other than through a wireless communication network **220.** The alternate download path may, for example, be used to load an encryption key onto the device **210** through a direct and thus reliable and trusted connection to thereby provide secure device communication.

The short-range communications subsystem **141** shown in FIG. 2 is an additional optional component which provides for communication between the device **210** and different systems or devices, which need not necessarily be similar devices. For example, the subsystem **141** may include an infrared device and associated circuits and components, or a Bluetooth™ communication module to provide for communication with similarly-enabled systems and devices. (Bluetooth™ is a registered trademark of Bluetooth SIG, Inc.)

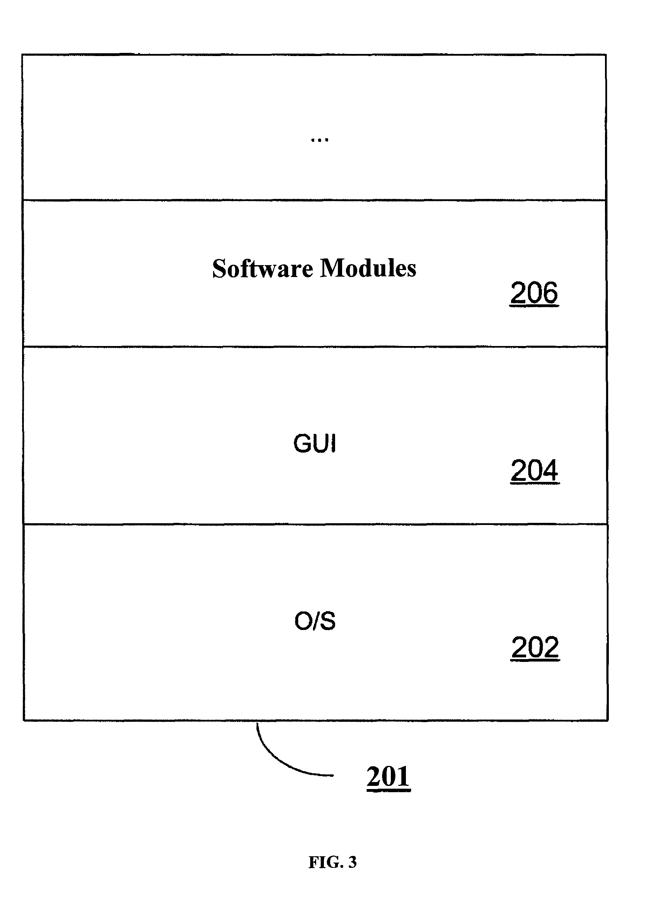

FIG. 3 is a block diagram illustrating a memory **201** of the wireless device **210** of FIG. 2. The memory **201** has various software components for controlling the device **210** and may include flash memory **124**, RAM **126**, or ROM (not shown), for example. In accordance with an embodiment of the invention, the wireless device **210** is intended to be a multi-tasking wireless communications device configured for sending and receiving data items and for making and receiving voice calls. To provide a user-friendly environment to control the operation of the device **210**, an operating system ("O/S") **202** resident on the device **210** provides a basic set of operations for supporting various applications typically operable through a graphical user interface ("GUI") module **204.** For example, the O/S **202** provides basic input/output system features to obtain input from the auxiliary I/O **128**, the keyboard **132**, the clickable thumbwheel **230**, and the like, and for facilitating output to the user. Thus, a user may interact with the wireless device **210** and its software modules **206** using a graphical user interface ("GUI") **180** displayed on the wireless device's display **122** through the operations of the GUI module 206. The wireless device's GUI **180** may be similar to that of the data processing system **100** as described above. Though not shown, one or more applications for managing communications or for providing personal digital assistant like functions may also be included in the wireless device **210**.

Thus, the wireless device **210** includes computer executable programmed instructions for directing the device **210** to implement the embodiments of the present application. The programmed instructions may be embodied in one or more hardware or software modules **206** resident in the memory **201** of the wireless device **210**. Alternatively, the programmed instructions may be embodied on a computer readable medium (such as a CD disk or floppy disk) which may be used for transporting the programmed instructions to the memory of the wireless device **210**. Alternatively, the programmed instructions may be embedded in a computer-readable signal or signal-bearing medium that is uploaded to a network by a vendor or supplier of the programmed instructions, and this signal or signal-bearing medium may be downloaded through an interface **111, 131, 141** to the wireless device **210** from the network by end users or potential buyers.

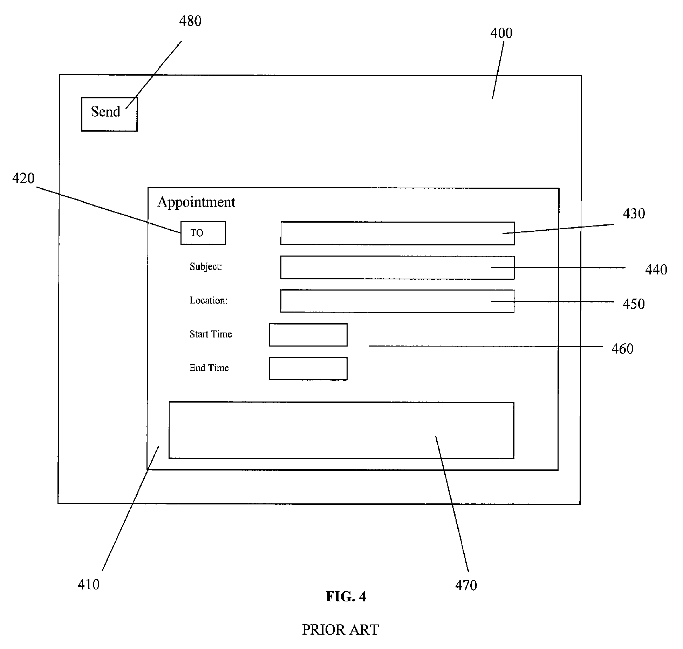

FIG. 4 is a screen capture illustrating an appointment window **410** of an exemplary graphical user interface ("GUI") **400** for composing a meeting request. The GUI **400** may be displayed, for example, on the display screen **140** of the data processing system **100**. The appointment window **410** includes a "To" field **430** for entering the names of attendees for the meeting. These names will form a list of attendees for the meeting. The attendees are selected by the meeting organizer. The appointment window also includes fields for defining the attributes or particulars of the meeting such as: a "Subject" field **440** for entering the title of the meeting, a "Location" field **450** for entering the location of the meeting, "Start time" and "End time" fields **460** for entering the start time and date and end time and date for the meeting, and a message field **470** for entering further details about the meeting. After completing the required fields in the appointment window **410**, the meeting organizer may then select the "Send" button **480** of the GUI **400** to send the meeting request to the selected attendees. The meeting request will then be displayed in each attendee's email inbox and calendar.

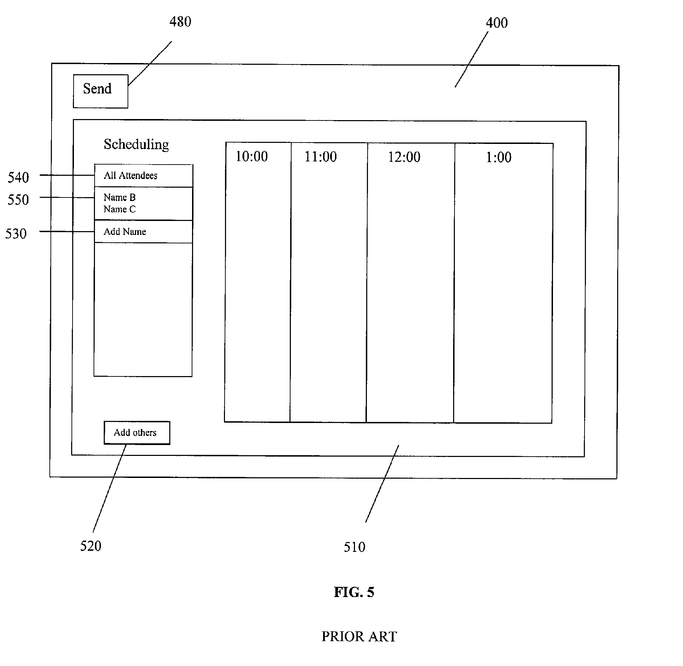

FIG. 5 is a screen capture illustrating a scheduling window **510** of the exemplary graphical user interface ("GUI") **400** of FIG. 4. The scheduling window **510** includes an "All Attendees" column **540** for presenting a list of attendees **550** currently invited to the meeting. The meeting organizer may add an attendee to the list of attendees **550** by clicking on the "Add Name" field **530** presented at the bottom of the list **550** presented in the "All Attendees" column **540** and entering the name to be added.

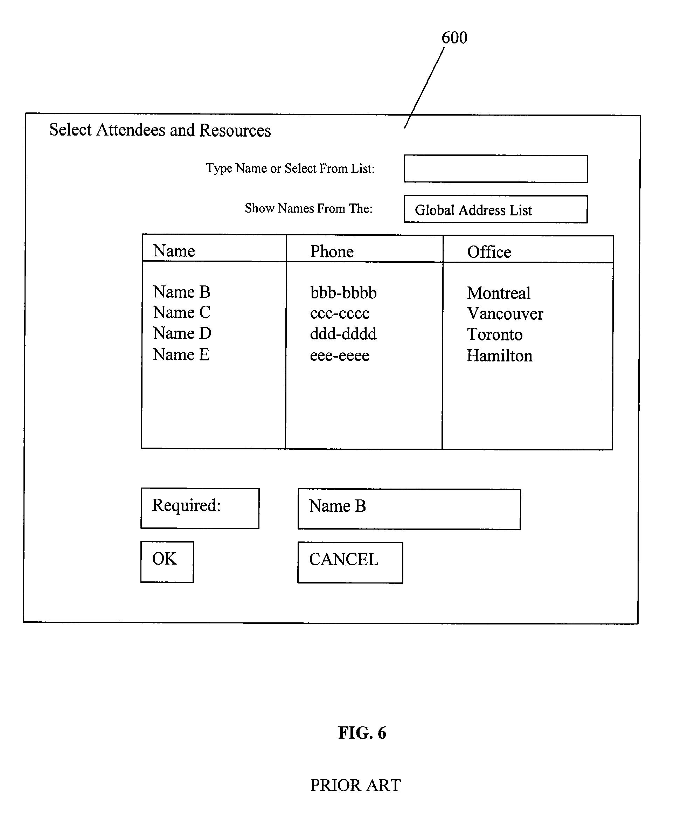

FIG. 6 is a screen capture illustrating an address book pop-up window **600** for selecting attendees for the meeting request of FIGS. 4 and 5. The pop-up window **600** may be displayed over the appointment **410** or scheduling windows **510** upon selection of the "To" button **420** and the "Add Others" button **520**, respectively. The address book pop-up window **600** allows the user to add attendees to the meeting request from the address book of an associated email application.

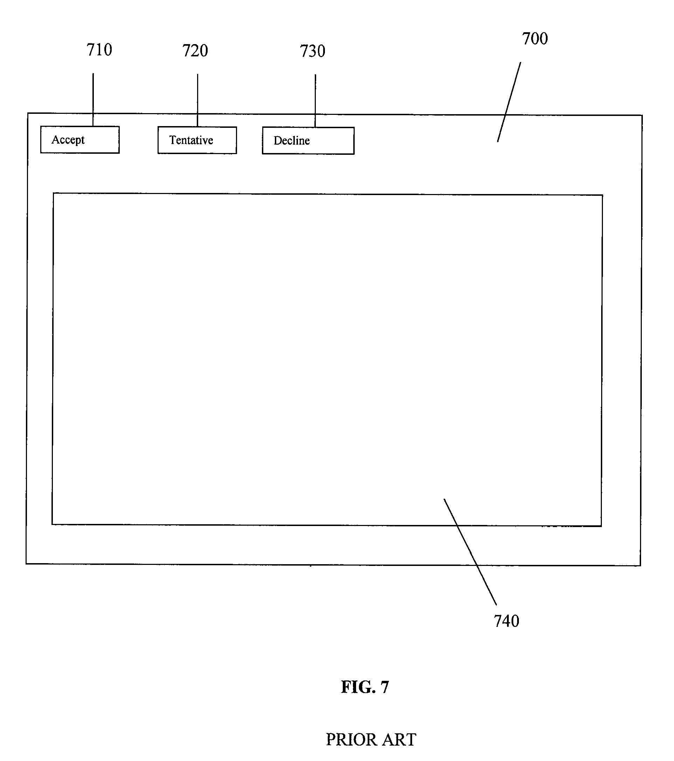

FIG. 7 is a screen capture illustrating a response window **700** for composing a meeting response to the meeting request of FIGS. 4 and 5. The response window **700** may be displayed, for example, on the display screen **122** of the wireless device **210**. The response window **700** is opened when an attendee selects the meeting request from his or her email inbox or calendar. To respond to the meeting request, the attendee has to click one of the buttons **710, 720, 730** presented in the response window **700**. When this is done, a meeting response is created and sent to the meeting organizer. In general, once an attendee responds, the request is removed from his or her inbox. The response buttons in the request are as follows. The "Accept" button **710** is selected when the attendee knows that he or she will be able to attend the meeting. When the attendee accepts a meeting, the meeting is scheduled in his or her calendar and he or she receives updates if the meeting organizer changes the details of the meeting. The "Decline" button **720** is selected when the attendee knows that he or she will not be able to attend the meeting. Declining a meeting deletes the item from the attendee's calendar (freeing that block of time), but it does not sever the attendees ties with the meeting: The attendee will still get updates if the meeting organizer makes them and the attendee will have the opportunity to respond to the update. If the attendee truly wants to opt out of a meeting, the attendee will have to ask the organizer to remove his or her name from the attendee list. The "Tentative" button **730** is selected when the attendee is interested in the meeting, but is not sure whether he or she will be able to attend. The response window **700** includes a message field **740** for entering a message to be delivered to the meeting organizer with the meeting response.

Now, consider the following scenario. User "A" creates a meeting request through the appointment window **410** of a calendar application such as that illustrated in FIGS. 4-7 and invites users "B", "C", and "D". Thus, user A is the meeting organizer and users B, C, and D are the attendees. As mentioned above, one problem faced by users of such an application is that, as the meeting organizer, only user A can change the list of attendees (or invitees) **550.** For example, user B may want to add a user E to the list of attendees **550**. However, the only way to accomplish this effectively is for user B to ask user A to add user E to the list of attendees **550**. This causes extra email and/or telephone use, and generally a waste of resources.

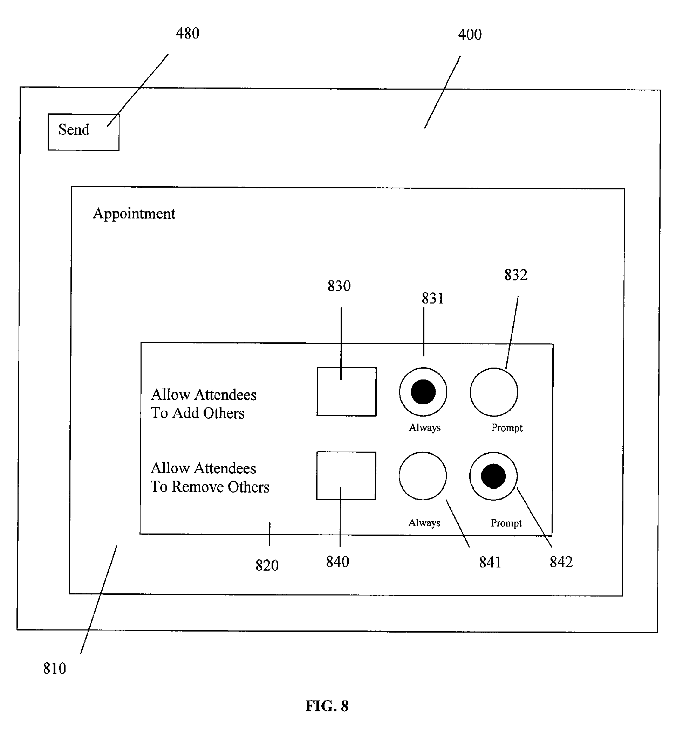

FIG. 8 is a screen capture illustrating an appointment window **810** of a graphical user interface ("GUI") **400** for composing a meeting request in accordance with an embodiment of the application. According to the application, the meeting organizer (i.e., user A) can control whether the attendees may add/remove to/from the list of attendees **550**. This can be accomplished by way of a dialog box such as the "Allow Attendees to Add Others/Allows Attendees to Remove Others" dialog box **820** shown in the appointment window **810** of FIG. 8. The dialog box **820** presents the meeting organizer with choices **830-832, 840-842** for configuring attendee access to the list of attendees **550** for the meeting. If the meeting organizer selects the "Allow Attendees to Add Others" checkbox **830** and then selects the corresponding "Always" radio button **831,** attendees are allowed unfettered access to the list of attendees **550** for making additions. Similarly, if the meeting organizer checks the "Allow Attendees to Remove Others" checkbox **840** and then selects the corresponding "Always" radio button **841**, attendees are allowed unfettered access to the list of attendees **550** for making removals. If the meeting organizer checks the "Allow Attendees to Add Others" checkbox **830** and then selects the corresponding "Prompt" radio button **832**, attendees may send a request message to the meeting organizer for each of their proposed additions to the list of attendees **550**. The meeting organizer may then either allow or deny the proposed addition. Similarly, if the meeting organizer checks the "Allow Attendees to Remove Others" checkbox **840** and then selects the corresponding "Prompt" radio button **842**, attendees may send a request message to the meeting organizer for each of their proposed removals from the list of attendees **550**. The meeting organizer may then either allow or deny the proposed removal. If the meeting organizer does not check either the "Allow Attendees to Add Others" checkbox **830** or the "Allow Attendees to Remove Others" checkbox **840**, attendees are not allowed to add or remove attendees. Note that for each of the "Allow Attendees to Add Others" and "Allow Attendees to Remove Others" checkboxes **830, 840**, the meeting organizer can select only one of the corresponding "Always" radio button **831, 841** and "Prompt" radio button **832, 842** at one time. That is, by selecting an "Always" radio button (e.g., **831**), the corresponding "Prompt" radio button (i.e., **832**) is unselected, and vice versa.

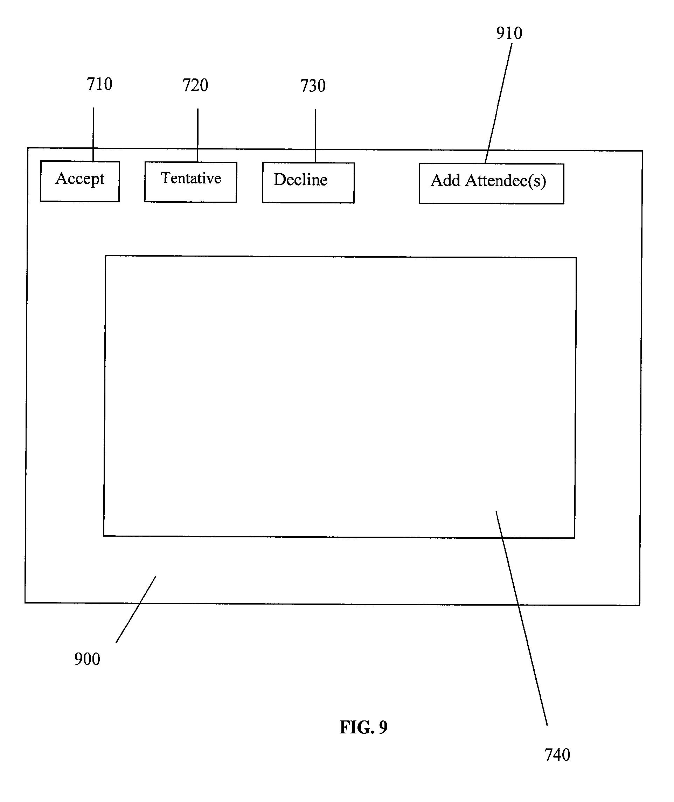

FIG. 9 is a screen capture illustrating a response window **900** for composing a meeting response to the meeting request of FIG. 8 in accordance with an embodiment of the application. If the meeting organizer selects the "Allow Attendees to Add Others" checkbox **830** from the "Allow Attendees to Add Others/Allow Attendees to Remove Others" dialog box **820** of FIG. 8, the response window **900** will include an "Add Attendee(s)" button or menu item **910** for an attendee to select if he or she wants to add attendees to the list of attendees **550** for the meeting. By selecting the "Add Attendee(s)" button **910**, the attendee (i.e., user B) may be presented with a window, similar to the scheduling window **510** of FIG. 5 or the address book pop-up window **600** of FIG. 6, from which the attendee may add attendees (i.e., if the meeting organizer previously selected the "Always" radio button **831**) or propose the addition of attendees (i.e., if the meeting organizer previously selected the "Prompt" radio button **832**). Similarly, if the meeting organizer selects the "Allow Attendees to Remove Others" checkbox **840** from the "Allow Attendees to Add Others/Allow Attendees to Remove Others" dialog box **820** of FIG. 8, the response window **900** will include an "Remove Attendee(s)" button or menu item (not shown) for an attendee to select if he or she wants to remove attendees from the list of attendees **550** for the meeting. By selecting the "Remove Attendee(s)" button, the attendee (i.e., user B) may be presented with a window, similar to the scheduling window **510** of FIG. 5 or the address book pop-up window **600** of FIG. 6, from which the attendee may remove attendees (i.e., if the meeting organizer previously selected the "Always" radio button **841**) or propose the removal of attendees (i.e., if the meeting organizer previously selected the "Prompt" radio button **842**).

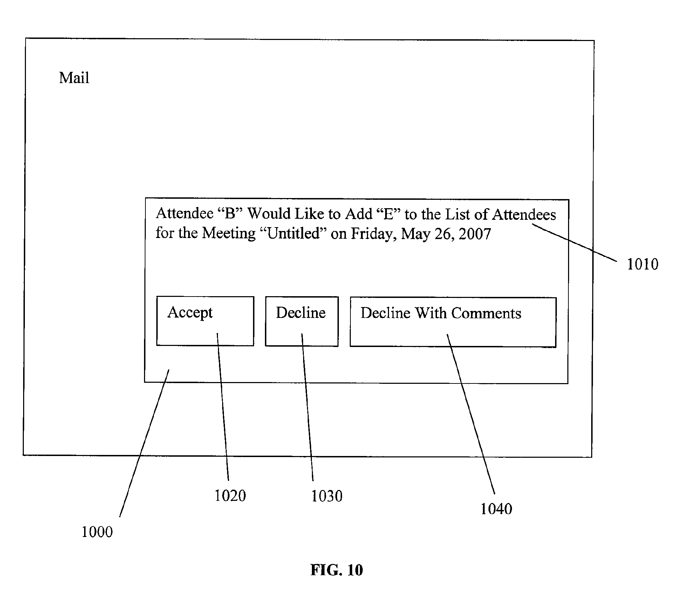

FIG. 10 is a screen capture illustrating an add attendee prompt dialog box **1000** in accordance with an embodiment of the application. If the meeting organizer (e.g., user A) previously selected the "Allow Attendees to Add Others" checkbox **830** and the corresponding "Prompt" radio button **832**, upon an attendee's (e.g., user B) selecting of attendees for addition (e.g., user E) to the list of attendees **550**, a message will be sent to the meeting organizer proposing the addition. This message may be in the form of an add attendee dialog box **1000** as shown in FIG. 10. The dialog box includes a text field **1010** outlining the proposed addition (i.e., the proposal or message) and choices **1020, 1030, 1040** for generating a response to the proposal. In FIG. 10, the proposal by user B is to add user E to the list of attendees **550.** The text of the proposal for display to the meeting organizer (i.e., user A) in the text field **1010** of the dialog box **1000** is as follows: "Attendee 'B' Would Like to Add 'E' to the List of Attendees for the Meeting 'Untitled' on Friday, May 26, 2006". If the meeting organizer chooses the "Accept" menu item or button **1020**, the attendee's add proposal will be accepted. In this case, a response message may be generated and sent to the attendee to inform the attendee that his or her proposal has been accepted. In addition, the list of attendees **550** will be updated in accordance with the proposal. If the meeting organizer chooses the "Decline" menu item or button **1020**, the attendee's add proposal will be declined. In this case, a response message may be generated and sent to the attendee to inform the attendee that his or her proposal has been declined. No changes will be made to the list of attendees **550**. If the meeting organizer chooses the "Decline With Comment" menu item or button **1030**, the attendee's add proposal will be declined. In this case, a response message may be generated and sent to the attendee to inform the attendee that his or her proposal has been declined. The response message may include comments provided by the meeting organizer in response to the attendee's proposal. Again, no changes will be made to the list of attendees **550**. Similarly, a remove attendee prompt dialog box (not shown) may also be provided to accommodate the meeting organizer's (e.g., user A) previous selection of the "Allow Attendees to Remove Others" checkbox **840** and the corresponding "Prompt" radio button **842**.

According to one embodiment, after the addition of an attendee to the attendee list **550**, an updated attendee list **550** is automatically (or selectably) sent to the original attendees and a new meeting request message is sent to the added attendee (i.e., user E in the above example).

According to one embodiment, the meeting organizer may set properties for each attendee. These properties may include what each attendee is allowed to do with respect to organizing the meeting. For example, the properties may include the ability to add attendees to the list of attendees **550**, the ability to remove attendees from the list of attendees **550**, and the ability to change attributes of the meeting. The meeting attributes may include one or more of the list of attendees **550**, a time for the meeting **460**, a date for the meeting, a location for the meeting **450**, a subject of the meeting **440**, and a reoccurrence of the meeting. The meeting organizer may set these properties on a per attendee basis. The property settings may be stored as defaults for use in setting up new meetings hence making the set-up of new meetings more efficient. For example, the meeting organizer may assign his or her assistant properties providing full permission to modify the list of attendees **550** and any or all of the meeting attributes. In addition, a first group of selected attendees may be assigned properties allowing them to add attendees to the list of attendees **550**. Furthermore, a second group of selected attendees may be assigned properties allowing them to only change a single meeting attribute such as the location for the meeting **450**.

The method provides several advantages as follows. The "Always" option **831, 832** optimizes the process of changing the attendee list **550**, reducing the need for the use of email or telephone by the meeting organizer and reducing the time required by the meeting organizer to update the attendee list **550**. The "Prompt" option **832, 842** provides further efficiencies as the attendee can use the calendar user interface **400** to add a new attendee, and a request for the addition can be automatically sent to the meeting organizer, who can respond to the request efficiently by way of the add attendee prompt dialog box **1000**.

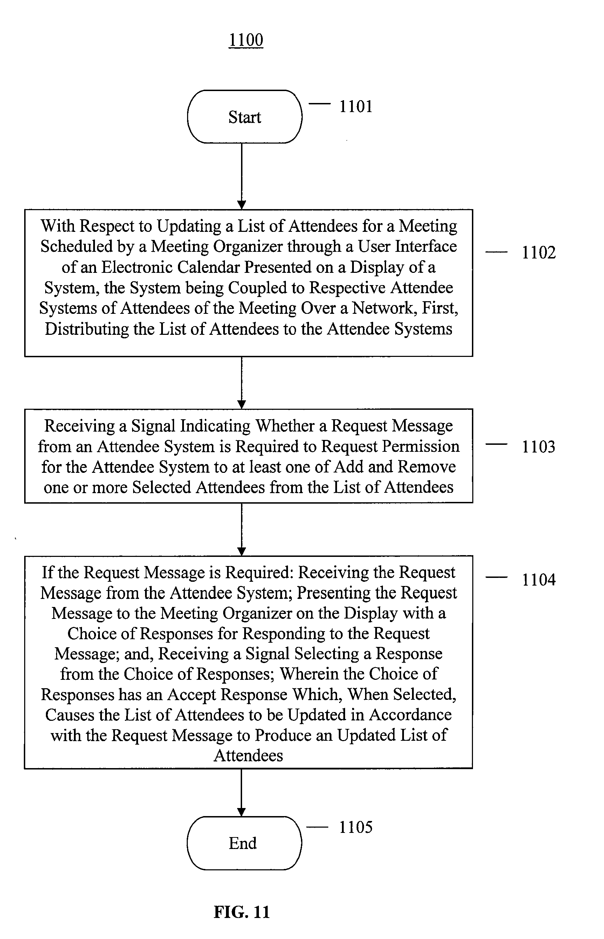

The above described method may be summarized with the aid of a flowchart. FIG. 11 is a flowchart illustrating operations **1100** of modules **206** within the memory of a data processing system (e.g., **210**) for updating a list of attendees **550** for a meeting scheduled by a meeting organizer through a user interface **400** of an electronic calendar presented on a display **122** of the system **210**, the system **210** being coupled to respective attendee systems (e.g., **100**) of attendees of the meeting over a network **220**, in accordance with an embodiment of the application.

At step **1101**, the operations **1100** start.

At step **1102**, the list of attendees **550** is distributed to the attendee systems **100**.

At step **1103**, a signal **832, 842** is received indicating whether a request message (e.g., **1010**) from an attendee system **100** is required to request permission for the attendee system **100** to at least one of add and remove one or more selected attendees from the list of attendees **550**.

At step **1104**, if the request message **1010** is required: the request message **1010** is received from the attendee system **100**; the request message **1010** is presented **1000** to the meeting organizer on the display **122** with a choice of responses **1020, 1030, 1040** for responding to the request message **1010**; and, a signal is received selecting a response from the choice of responses. The choice of responses **1020**, **1030, 1040** has an accept response **1020** which, when selected, causes the list of attendees **550** to be updated in accordance with the request message **1010** to produce an updated list of attendees.

At step **1105**, the operations **1100** end.

The method may further include, if the request message 1010 is not required, allowing the attendee systems to update the list of attendees **550** to produce the updated list of attendees. The choice of responses **1020, 1030, 1040** may have a decline response **1030** which, when selected, causes no update to the list of attendees **550**. The decline response **1030**, when selected, may send a text message **1040** composed by the meeting organizer to the attendee system **100**. The method may further include distributing the updated list of attendees to the attendee systems **100**. The method may further include receiving a signal **830, 840** indicating whether the attendee systems **100** may at least one of add and remove one or more selected attendees from the list of attendees **550**. The attendee systems **100** may be selected ones of the attendee systems **100**. The method may further include receiving a signal indicating whether selected ones of the attendee systems **100** may alter one or more attributes of the meeting. The one or more attributes may include one or more of the list of attendees **550**, a time for the meeting **460**, a date for the meeting, a location for the meeting **450**, a subject of the meeting **440**, and a reoccurrence of the meeting. And, the network **220** may include a wireless network and a wired network and at least one of the system **210** and the attendee systems **100** may be a wireless device.

The above described method is generally performed by the wireless device **210**. However, according to an alternate embodiment, the method can be performed by the data processing system **100** or any data processing system including, for example, a personal computer and a laptop computer.

While embodiments of this application are primarily discussed as a method, a person of ordinary skill in the art will understand that the apparatus discussed above with reference to a wireless device **210** and a data processing system **100**, may be programmed to enable the practice of the method of the invention. Moreover, an article of manufacture for use with a wireless device **210** or data processing system **100**, such as a pre-recorded storage device or other similar computer readable medium including program instructions recorded thereon, may direct the wireless device **210** or data processing system **100** to facilitate the practice of the method of these embodiments. It is understood that such apparatus and articles of manufacture also come within the scope of the application.

The embodiments of the application described above are intended to be exemplary only. Those skilled in this art will understand that various modifications of detail may be made to these embodiments, all of which come within the scope of the application.

## Claims

1. A method for updating a list of attendees for a meeting scheduled by a meeting organizer through a user interface of an electronic calendar presented on a display of a system, the system being coupled to respective attendee systems of attendees of the meeting over a network, the method comprising:
distributing the list of attendees to the attendee systems;
receiving a signal indicating whether a request message from an attendee system is required to request permission for the attendee system to add and/or remove one or more selected attendees from the list of attendees;
if the request message is required: receiving the request message from the attendee system; presenting the request message to the meeting organizer on the display with a choice of responses for responding to the request message; and, receiving a signal selecting a response from the choice of responses; wherein the choice of responses has an accept response which, when selected, causes the list of attendees to be updated in accordance with the request message to produce an updated list of attendees.

2. The method of claim 1 and further comprising, if the request message is not required, allowing the attendee systems to update the list of attendees to produce the updated list of attendees.

3. The method of claim 1 or claim 2 wherein the choice of responses has a decline response which, when selected, causes no update to the list of attendees.

4. The method of claim 3 wherein the decline response, when selected, sends a text message composed by the meeting organizer to the attendee system.

5. The method of any one of claims 1 to 4 and further comprising distributing the updated list of attendees to the attendee systems.

6. The method of any one of claims 1 to 5 and further comprising receiving a signal indicating whether the attendee systems may add and/or remove one or more selected attendees from the list of attendees.

7. The method of claim 6 wherein the attendee systems are selected ones of the attendee systems.

8. The method of any one of the preceding claims and further comprising receiving a signal indicating whether selected ones of the attendee systems may alter one or more attributes of the meeting.

9. The method of claim 8 wherein the one or more attributes comprise one or more of: the list of attendees, a time for the meeting, a date for the meeting, a location for the meeting, a subject of the meeting, and/or a reoccurrence of the meeting.

10. The method of any one of the preceding claims wherein the network comprises a wireless network and a wired network and at least one of the system and the attendee systems is a wireless device.

11. A system for updating a list of attendees for a meeting scheduled by a meeting organizer through a user interface of an electronic calendar presented on a display of the system, the system being coupled to respective attendee systems of attendees of the meeting over a network, the system comprising:
a processor coupled to memory and to an interface to the network; and,
modules within the memory and executed by the processor for causing the system to perform the steps of the method of any one of claims 1 to 10.

12. A computer readable medium storing computer readable instructions which, when executed by a processor of a computing system, cause said system to implement the method of any one of claims 1 to 10.

13. A communication system comprising the system of claim 11 and a plurality of attendee systems able to communicate therewith.

## Amended claims

### Amended claims in accordance with Rule 137(2) EPC.

**1.** A method for updating a list of attendees (550) for a meeting scheduled by a meeting organizer through a user interface (400) of an electronic calendar presented on a display (122) of a meeting organizer system (210), the meeting organizer system (210) being coupled to at least respective attendee systems of the attendees listed on the list of attendees (550) over a network, the method comprising:
distributing the list of attendees (550) to the attendee systems from the meeting organizer system (210) ;
receiving at the meeting organizer system (210) a signal indicating whether permission is required for an attendee system of the attendee systems to cause an update to the list of attendees (550);
if permission is required:
receiving at the meeting organizer system (210) from the attendee system a request message requesting the update;
presenting the request message, on the display (122) of the meeting organizer system (210), with a choice of responses for responding to the request message; and, receiving at the meeting organizer system (210) a signal selecting a response from the choice of responses; wherein the choice of responses includes an accept response which, when selected, causes the list of attendees (550) to be updated in accordance with the request message to produce an updated list of attendees (550).

**2.** The method of claim 1 wherein the update is at least one of an addition to the list of attendees (550) and a deletion from the list of attendees (550).

**3.** The method of claim 1 or claim 2 and further comprising, if permission is not required, allowing the attendee system to cause the update to the list of attendees (550) to produce the updated list of attendees (550).

**4.** The method of any one of claims 1 to 3 wherein the choice of responses includes a decline response which, when selected, causes no update to the list of attendees (550).

**5.** The method of claim 4 wherein the decline response, when selected, causes a text message composed at the meeting organizer system (210) to be sent to the attendee system.

**6.** The method of any one of claims 1 to 5 and further comprising distributing the updated list of attendees (550) to at least respective attendee systems of attendees listed in the updated list of attendees (550).

**7.** The method of any one of claims 1 to 6 and further comprising receiving at the meeting organizer system (210) a signal indicating whether the attendee system is enabled to cause the update to the list of attendees (550).

**8.** The method of any one of the preceding claims and further comprising receiving at the meeting organizer system (210) a signal enabling selected ones of the attendee systems to alter one or more attributes of the meeting.

**9.** The method of claim 8 wherein the one or more attributes comprise one or more of: a time for the meeting, a date for the meeting, a location for the meeting, a subject of the meeting, and/or a reoccurrence of the meeting.

**10.** The method of any one of the preceding claims wherein the network comprises a wireless network (220) and a wired network and at least one of the meeting organizer system (210) and the attendee systems is a wireless device.

**11.** A meeting organizer system (210) for updating a list of attendees (550) for a meeting scheduled by a meeting organizer through a user interface (400) of an electronic calendar presented on a display (122) of the meeting organizer system (210), the meeting organizer system (210) being coupled to respective attendee systems of attendees of the meeting over a network, the meeting organizer system (210) comprising:
a processor (138) coupled to memory (126) and to an interface (111) to the network; and,
modules within the memory (126) and executed by the processor (138) for causing the meeting organizer system (210) to perform the steps of the method of any one of claims 1 to 10.

**12.** A computer readable medium storing computer readable instructions which, when executed by a processor (138) of a computing system, cause said system to implement the method of any one of claims 1 to 10.

**13.** A communication system comprising the meeting organizer system of claim 11 and at least a plurality of attendee systems able to communicate therewith.
